# FASCICULE DE BREVET EUROPEEN

(11) **EP 1 146 655 B1**
(45) Date de publication et mention de la délivrance du brevet: **22.08.2007**
(21) Numéro de dépôt: 01201201.9
(22) Date de dépôt: 02.04.2001
(51) Int. Cl.: H04B 1/16, H04M 1/73

(54) **Dispositif de communication portable à système de maintien en service automatique et procédé de maintien en service d'un tel dispositif**
System und Verfahren zur automatischen Inbetriebhaltung eines tragbaren Kommunikationsgerätes
Sytem and method for maintaining automatically in operation a portable communication device

(30) Priorité: 11.04.2000 FR 0004641
(43) Date de publication de la demande: 17.10.2001
(73) Titulaire: NXP B.V., 5656 AG Eindhoven (NL)
(72) Inventeur: Regent, Nicolas, 75008 Paris (FR)
(74) Mandataire: Pennings, Johannes

(56) Documents cités:
- WO-A-96/27827
- WO-A-98/07265
- US-A- 5 438 695
- US-A- 5 519 346
- US-A- 5 910 944

## Description

La présente invention concerne un dispositif de communication portable équipé d'un système de maintien en service automatique. Elle concerne également un procédé de maintien en service du dispositif, qui permette de garantir la quasi-permanence de son fonctionnement.

Le fonctionnement considéré dans le cadre de l'invention peut être éventuellement un fonctionnement actif pendant lequel une communication a effectivement lieu. Cependant, l'invention concerne plus particulièrement le maintien d'un fonctionnement de veille du dispositif, lors duquel celui-ci est en attente d'une communication.

L'invention trouve des applications essentiellement dans le domaine de la téléphonie mobile, ainsi que celui des ordinateurs portables équipés de modem.

Le document WO 98/07265 décrit un téléphone portable comportant une source d'énergie principale, une unité de traitement alimentée par la source d'énergie principale, et des moyens de mise en service du téléphone à une date de mise en service programmable.

Le document EP-A 0 607 919 montre un téléphone portable équipé d'un système de surveillance capable de détecter une coupure brève de l'alimentation. Le système de surveillance est alimenté par une source d'énergie auxiliaire et est associé à une mémoire destinée à stocker l'état de fonctionnement d'une unité de traitement principale. Après une coupure brève de l'alimentation, le système de surveillance permet la reprise du traitement en cours à partir de l'état de fonctionnement mémorisé.

Lorsqu'en revanche, la coupure de l'alimentation excède une certaine durée, elle est considérée comme une coupure longue et est assimilée à une commande volontaire de mise hors service. Dans ce cas, les données mémorisées ne sont plus conservées et le fonctionnement de l'unité de traitement est initialisé. Les termes "en service" et "hors service" sont utilisés dans le présent texte comme synonymes respectivement d'un état de fonctionnement du dispositif, actif ou de veille, et d'un état éteint où aucune communication ne peut avoir lieu.

Un dispositif tel que présenté ci-dessus nécessite une source d'énergie auxiliaire importante pour assurer le fonctionnement du système de surveillance et de la mémoire. Or, la mise en place d'une telle source d'énergie peut constituer une contrainte sévère en raison des impératifs de réduction du coût et de l'encombrement des dispositifs de communication portables.

En revanche, lorsque le dispositif est dépourvu de moyens de détection de coupures d'alimentation brèves, toute coupure de l'alimentation est assimilée à une mise hors service volontaire. Le dispositif reste donc hors service jusqu'à ce que l'utilisateur actionne une commande de mise en service volontaire.

Cette situation est particulièrement gênante lorsque le dispositif de communication est dans un état de fonctionnement de veille et qu'une coupure d'alimentation ou une autre avarie le mettent hors fonctionnement à l'insu de l'utilisateur. Parmi les causes de mise hors fonctionnement accidentelles d'un dispositif de communication on peut citer un faux contact, une mise hors circuit de batteries, résultant d'un choc par exemple, ou un dysfonctionnement temporaire d'un organe du dispositif. Toutes ces causes passent généralement inaperçues pour l'utilisateur.

Dans le cas d'un téléphone portable, l'interruption de l'état de fonctionnement de veille empêche l'utilisateur de recevoir un appel.

Un certain nombre de téléphones portables comportent un moyen permettant de programmer une date ou une heure de mise en fonctionnement automatique. Cette programmation permet de mettre le téléphone dans un état de veille, par exemple, à l'heure attendue d'un appel. Dans ce cas encore, l'utilisateur n'est pas à l'abri d'une mise hors service accidentelle survenant après la mise en veille, et risque également de manquer l'appel attendu.

La présente invention a pour but de proposer un système permettant d'éviter les difficultés mentionnées ci-dessus.

Un but de l'invention est en particulier de proposer un dispositif de communication capable d'être maintenu de façon plus fiable dans un état de veille.

Un but est encore de proposer un système de maintien en service qui présente une très faible consommation de courant.

Enfin, un but de l'invention est de proposer un système pouvant être installé à moindre coût sur des téléphones portables.

Pour atteindre ces buts, l'invention a plus précisément pour objet un dispositif de communication portable à système de maintien en service comportant :
- une source d'énergie principale,
- une unité de traitement alimentée par la source d'énergie principale,
- des moyens de mise en service du dispositif à une date de mise en service programmable.

Conformément à l'invention, d'une part, le dispositif comporte en outre i) une horloge pour fournir une date courante, ii) une source d'énergie auxiliaire propre à alimenter l'horloge lorsque le dispositif de communication est mis hors service, et iii) des moyens de mise à jour uniquement alimentés électriquement à partir de la source d'énergie principale et agencés, lorsque le dispositif est en service, pour mettre à jour, de façon automatique et périodique, la date de mise en service programmable à une date postérieure à la date courante fournie par l'horloge, et d'autre part, les moyens de mise en service sont chargés, lorsque le dispositif est accidentellement mis hors service, de comparer la date courante à la date de mise en service précédemment mise à jour, afin de déclencher la mise en service du dispositif lorsque les dates courante et de mise en service coïncident.

Il convient de préciser ici que les termes "date de mise en service" sont utilisés pour désigner avant tout un instant de mise en service et n'impliquent pas nécessairement un calcul du temps en jours. La date peut être exprimée certes en jours, mais aussi en heures, minutes et/ou secondes. La date peut aussi être exprimée en une autre unité liée par exemple à un décompte d'impulsions d'horloge.

Les moyens de programmation automatique d'une date de mise en service postérieure à la date courante, qui peuvent être compris dans l'unité de traitement, sont alimentés seulement lorsque l'unité de traitement est en service. Leur consommation électrique n'est pas supportée par la source d'énergie auxiliaire. L'horloge, en revanche, n'est pas affectée par une mise hors service de l'unité de traitement.

Lors d'une mise hors service accidentelle du dispositif, et en particulier de l'unité de traitement, les moyens de programmation automatique cessent de différer la date de mise en service. Ainsi, la date courante, qui évolue avec le fonctionnement ininterrompu de l'horloge, peut atteindre la dernière date de mise en service programmée. Une nouvelle mise en service est alors provoquée.

Entre l'instant de la mise hors service accidentelle et l'instant de la nouvelle mise en service, l'énergie électrique consommée est essentiellement celle nécessaire au fonctionnement de l'horloge. Or, l'énergie nécessaire au fonctionnement de l'horloge est particulièrement faible et peut être fournie par une source d'énergie auxiliaire très sommaire. Il s'agit par exemple d'une capacité électrique qui est chargée à partir de la source d'énergie principale lors du fonctionnement normal du dispositif.

Dans une réalisation particulière du dispositif, celui-ci peut comporter un registre de date de mise en service. Ce registre est mis à jour par les moyens de mise à jour automatique à une date D telle que D = t+N, où N est une valeur de temps supérieure ou égale à une périodicité de mise à jour et où t est la date courante. La périodicité est comprise comme la durée séparant deux mises à jour successives mais n'implique pas nécessairement que cette durée soit régulière.

A titre d'exemple, il est possible de reprogrammer toutes les secondes la date D de mise en service, en ajoutant à chaque fois 2 secondes à la date courante pour obtenir la nouvelle date de mise en service.

Lorsque la valeur de temps ajoutée à la date courante est supérieure à la périodicité de la mise à jour de la date D, une mise en service automatique peut être évitée aussi longtemps que le fonctionnement normal du dispositif n'est pas interrompu. Par ailleurs le choix de la valeur de temps N permet de fixer la durée maximale pendant laquelle le dispositif risque d'être hors service suite à une mise hors service accidentelle.

Pour réduire la probabilité de recevoir un appel de communication lors d'une interruption accidentelle du fonctionnement, la valeur de temps N ajoutée à la date courante est préférentiellement choisie faible, par exemple de l'ordre de une ou deux secondes, et la périodicité de mise à jour de la date est choisie élevée (toutes les secondes par exemple).

On peut observer ici que le système de maintien en service de l'invention n'est pas un système qui interdit de façon absolue la mise hors service accidentelle du dispositif de communication, mais permet de réduire la durée de l'interruption du fonctionnement à une valeur suffisamment faible pour que l'interruption soit sans incidence pour l'utilisateur.

L'invention concerne également un procédé de maintien en service d'un dispositif de communication portable propre à être mis en service à une date de mise en service programmable, consistant :
- lorsque le dispositif de communication est en service, à régulièrement mettre à jour la date de mise en service programmable à une date postérieure à une date courante, et
- lorsque le dispositif de communication est accidentellement mis hors service, à comparer la date courante à la date de mise en service précédemment mise à jour, afin de mettre en service le dispositif lorsque les dates courante et de mise en service coïncident.

Comme indiqué ci-dessus, on entend par mise hors service accidentelle, une mise hors service provoquée, par exemple, par une micro-coupure de l'alimentation électrique, par un dysfonctionnement d'un circuit ou par toute autre cause susceptible d'échapper à la volonté de l'utilisateur.

Toutefois, une mise hors fonctionnement volontaire peut également être effectuée par l'utilisateur, par exemple en actionnant une commande prévue à cet effet. Dans ce cas, aucune nouvelle mise en service automatique n'est effectuée. A cet effet, après un arrêt volontaire du dispositif, il est possible, par exemple, d'interrompre le fonctionnement de l'horloge, ou d'annuler le contenu d'un registre prévu pour contenir les dates de mise en service programmées.

D'autres caractéristiques et avantages de l'invention ressortiront de la description qui va suivre, en référence aux figures des dessins annexés. Cette description est donnée à titre purement illustratif et non limitatif.
La figure 1 est une représentation schématique des principaux éléments d'un dispositif de communication conforme à l'invention.
La figure 2 est un organigramme illustrant le fonctionnement d'un dispositif conforme à l'invention.

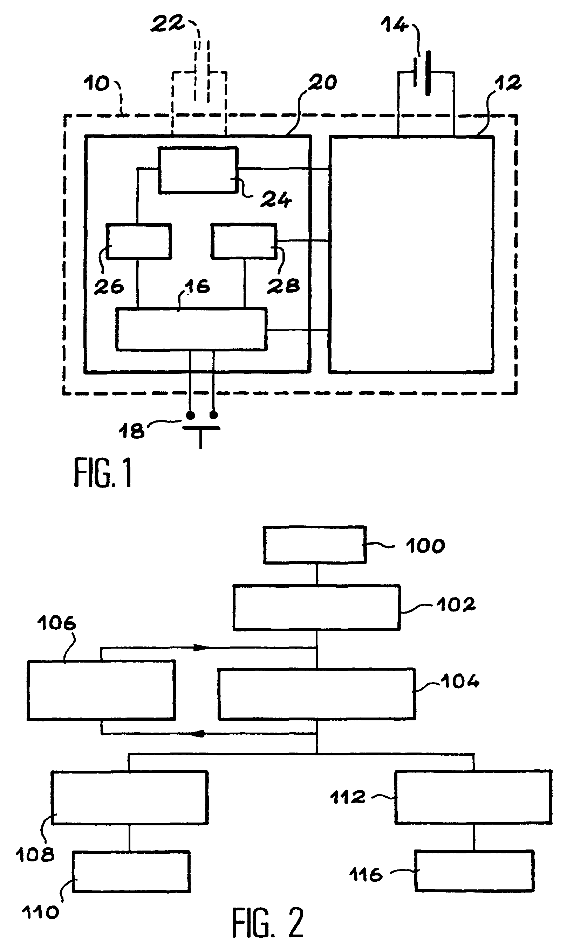

La figure 1 montre une unité de traitement 10 d'un dispositif de communication tel qu'un téléphone portable.

L'unité de traitement 10, par exemple à micro-processeur, comprend une première partie 12 alimentée uniquement par une batterie électrique 14 qui forme une source d'énergie principale. La première partie 12 assure l'essentiel des fonctions de traitement relatives à la communication. Ces fonctions, propres à la téléphonie, sont connues en soi et ne sont donc pas décrites ici. La première partie 12 constitue également, dans l'exemple illustré, les moyens de mise à jour de la date de mise en service.

Le fonctionnement de la première partie 12 de l'unité de traitement est suspendu après une mise hors service accidentelle, telle qu'en particulier une mise hors service résultant d'une coupure temporaire (microcoupure) de la source d'énergie principale.

Un commutateur 18, actionnable par l'utilisateur, est prévu pour la mise en service du dispositif de communication, et en particulier de la première partie 12. Le commutateur est actionné par l'utilisateur notamment pour remettre en service le dispositif après un arrêt volontaire. On peut observer que le commutateur 18 est associé à des moyens 16 de mise en service. Ces moyens, dont le fonctionnement est précisé ultérieurement, permettent de remettre également en service le dispositif, de façon automatique, après un arrêt accidentel.

Une deuxième partie 20 de l'unité de traitement est alimentée soit par la source d'énergie principale 14 lors d'un fonctionnement normal, soit par une source d'énergie auxiliaire 22, en cas de coupure de la source principale. Elle comprend pour l'essentiel une horloge 24. La deuxième partie 20 est assimilable à un système de veille destiné à provoquer une mise en service automatique du dispositif de communication, et en particulier de la première partie 12, après une coupure accidentelle. La deuxième partie, c'est-à-dire le système de veille, peut également être mis à profit pour provoquer la mise en service du dispositif à une date programmée par l'utilisateur.

L'horloge 24 de la deuxième partie, qui peut être distincte d'une horloge, non représentée, de la première partie 12, est de préférence une horloge de faible fréquence de façon à limiter sa consommation en énergie. A titre d'exemple, une horloge avec une fréquence de 32KHz peut fonctionner avec un courant aussi faible que 25 microampères.

Avec une consommation aussi faible, il n'est pas nécessaire de prévoir expressément une source d'alimentation électrique auxiliaire. Dans l'exemple de la figure, un condensateur 22, représente la somme des capacités électriques existant normalement sur un dispositif de communication tel qu'un téléphone portable. Il s'agit, par exemple, de capacités de filtrage existant pour la source d'énergie principale. Le condensateur 22 constitue donc ici la source d'énergie auxiliaire.

Un premier registre 26, relié à l'horloge 24, contient une valeur représentative d'une date courante. Le contenu de ce registre est continuellement renouvelé ou incrémenté par l'horloge, même lorsque le dispositif de communication est accidentellement mis hors service.

Un deuxième registre 28 est prévu pour contenir une date de mise en service automatique. On observe sur la figure que ce registre est relié à la première partie 12 de l'unité de traitement. Celle-ci est programmée pour périodiquement renouveler le contenu du deuxième registre 28 et le porter à une valeur qui correspond à une date postérieure à la date courante contenue dans le premier registre 26.

Enfin, les deux registres 26,28 sont reliés aux moyens de mise en service 16. Les moyens 16 de mise en service sont pourvus d'un comparateur pour comparer le contenu des deux registres 26, 28 et déclencher la mise en service du dispositif si les valeurs s'avèrent être les mêmes. Le déclenchement opéré par les moyens 16 est alors équivalent à un actionnement du commutateur externe 18 par l'utilisateur.

Il convient de préciser ici que la figure 1 distingue les différents éléments du dispositif en se fondant essentiellement sur leur fonction, afin d'en simplifier la description. Toutefois les différentes fonctions de comparaison du contenu des registres, etc. peuvent être accomplies par simple programmation d'un microprocesseur de unité de traitement 10.

La mise en oeuvre de invention est particulièrement économique pour des téléphones portables qui comportent un système de mise en service retardé permettant de les mettre en veille à partir d'une date ou d'une heure sélectionnée par l'utilisateur. Ces téléphones sont déjà équipés des moyens de mise en service 16, mentionnés précédemment. Il suffit alors de programmer l'unité de traitement, et en particulier la première partie 12, pour que la date de mise en service soit périodiquement renouvelée, lorsque le téléphone est en service.

La figure 2, décrite ci-après, résume le fonctionnement d'un dispositif conforme à l'invention.

Une première étape représentée par la case 100 correspond à la mise en service du dispositif de communication. Ceci correspond à une commande du commutateur 18 de la figure 1 par l'utilisateur. Le dispositif est alors soit dans un mode de communication effective soit dans un état de veille, en attente d'une communication. La mise en service initiale 100 peut aussi résulter d'une mise en service retardée, dont la date aura préalablement été programmée par l'utilisateur (si cette fonction est disponible).

Une deuxième étape, opérée par l'unité de traitement, est représentée par la case 102. Celle-ci correspond à l'activation de l'horloge 24 (figure 1) du système de surveillance et au chargement dans le deuxième registre 28 (figure 1) d'une valeur D correspondant à t+N, où t est la date courante et N un incrément de 2 sec, par exemple.

Une case suivante 104 correspond au fonctionnement normal de l'unité de traitement, et en particulier de la première partie de cette unité. La case 104 est en parallèle avec une case 106 qui correspond à une nouvelle mise à jour de la valeur contenue dans le deuxième registre. La mise à jour est effectuée périodiquement par la première partie de l'unité de traitement. Aussi longtemps que la première partie de l'unité de traitement fonctionne normalement, la date de mise en service programmée (et sans cesse renouvelée) n'est pas atteinte par le décompte de l'horloge.

Le fonctionnement peut être arrêté par l'utilisateur, par désactivation volontaire du système de surveillance. Cette commande, indiquée avec la référence 108, aboutit à une mise hors fonctionnement 110. Dans ce cas aucune nouvelle mise en service automatique n'est possible sans intervention volontaire de l'utilisateur.

La case 112 correspond à l'épuisement du temps programmé dans le deuxième registre. Ceci signifie que la date courante est devenue identique à la date de mise en service programmée. Cette situation ne se produit que lorsque le deuxième registre cesse d'être mis à jour c'est à dire après une mise hors service accidentelle du dispositif, qui suspend le fonctionnement de la première partie de l'unité de traitement. Il en résulte une nouvelle mise en service automatique indiquée par la case 116.

## Revendications

1. Dispositif de communication portable à système de maintien en service comportant :
- une source d'énergie principale (14),
- une unité de traitement (10) alimentée par la source d'énergie principale (14),
- des moyens (26, 28, 16) de mise en service du dispositif à une date de mise en service programmable,
**caractérisé en ce qu'**il comprend en outre:
- une horloge (24) pour fournir une date courante,
- une source d'énergie auxiliaire (22) propre à alimenter ladite horloge (24) lorsque ledit dispositif de communication est mis hors service,
- des moyens (12) de mise à jour uniquement alimentés électriquement à partir de la source d'énergie principale (14) et agencés, lorsque ledit dispositif de communication est en service, pour mettre à jour, de façon automatique et périodique, ladite date de mise en service programmable à une date postérieure à ladite date courante fournie par ladite horloge, et
**en ce que** lesdits moyens de mise en service (26, 28, 16) sont agencés, lorsque le dispositif de communication est accidentellement mis hors service, pour comparer ladite date courante à ladite date de mise en service précédemment mise à jour, de manière à déclencher la mise en service dudit dispositif lorsque lesdites dates courante et de mise en service coïncident.

2. Dispositif de communication portable selon la revendication 1, dans lequel l'unité de traitement (10) comporte les moyens (12) de mise à jour automatique de la date de mise en service.

3. Dispositif de communication portable selon la revendication 1, **caractérisé en ce que** lesdits moyens de mise en service (26, 28, 16) comprennent un registre (28) de date de mise en service, propre à être mis à jour par les moyens de mise à jour automatique (12), à une date D, postérieure à la date courante et telle que D = t+ N, où N est une valeur de temps supérieure ou égale à une périodicité de mise à jour et où t est la date courante.

4. Dispositif de communication portable selon la revendication 1, dans lequel la source d'énergie auxiliaire comporte une capacité électrique.

5. Dispositif de communication portable selon l'une des revendications 1 à 4 **caractérisé en ce qu'**il constitue un téléphone portable.

6. Procédé de maintien en service d'un dispositif de communication portable propre à être mis en service à une date de mise en service programmable, **caractérisé en ce qu'**il consiste :
- lorsque le dispositif de communication est en service, à régulièrement mettre à jour ladite date de mise en service programmable à une date postérieure à une date courante, et
- lorsque le dispositif de communication est accidentellement mis hors service, à comparer ladite date courante à la date de mise en service précédemment mise à jour, de manière à mettre en service ledit dispositif lorsque lesdites dates courante et de mise en service coïncident.

7. Procédé selon la revendication 6, dans lequel la date de mise en service est mise à jour par ajout d'un incrément de temps à la date courante.

8. Procédé selon la revendication 7, dans lequel la date de mise en service est mise à jour avec une périodicité plus courte qu'une valeur de l'incrément de temps.

## Claims

1. A portable communication device equipped with an automatic operation-keeping system, comprising:
- a main power source (14),
- a processing unit (10) supplied with power by the main power source,
- means (26, 28, 16) for starting the device at a programmable start time, **characterized in that** it further includes:
- a clock (24) to produce a current time, and
- an auxiliary power source (22) for supplying power to the clock (24) when the communication device is stopped,
- updating means (12) solely supplied with electric power by the main power source (14) and arranged, when the communication device is in operation, for automatically and periodically updating the programmable start time at a later time than the current time produced by the clock
and **in that** the start means (26, 28, 16) are arranged, when the device is switched off by accident, for comparing the current time with the previously updated start time in order to trigger the start of the device when the current time and start time coincide.

2. A portable communication device as claimed in claim 1, in which the processing unit (10) comprises the automatic updating means (12) for updating the start time.

3. A portable communication device as claimed in claim 1, **characterized in that** said means (26, 28, 16) for starting the device comprise a register (28) for storing start times, updated by automatic updating means (12) to a time D later than the current time and so that D = t+N, where N is a time value higher than or equal to an updating interval and where t is the current time.

4. A portable communication device as claimed in claim 1, in which the auxiliary power source comprises an electric capacitance.

5. A portable communication device as claimed in one of the claims 1 to 4, **characterized in that** the device is a portable telephone.

6. A method of keeping in operation a portable communication device suitable for being started at a programmable start time, **characterized in that** the method comprises:
- when the communication device is in operation, to regularly update said programmable start time at a time later than a current time, and
- when the communication device is stopped, to compare said previously updated current time so as to start said device when said current time and start time coincide.

7. A method as claimed in claim 6, in which the start time is updated by adding a time increment to the current time.

8. A method as claimed in claim 7, in which the start time is updated with a shorter interval than a value of the time increment.

## Patentansprüche

1. Tragbares Kommunikationsgerät mit Inbetriebnahmesystem, umfassend:
- eine Hauptenergiequelle (14),
- eine Bearbeitungseinheit (10), die von der Hauptenergiequelle (14) versorgt wird,
- Mittel (26, 28, 16) zur Inbetriebnahme der Vorrichtung zu einem programmierbaren Inbetriebnahmedatum,
**dadurch gekennzeichnet, dass** es ferner umfasst:
- eine Zeitschaltung (24), um ein laufendes Datum zu liefern,
- eine Nebenenergiequelle (22), die die Zeitschaltung (24) versorgen kann, wenn das Kommunikationsgerät ausgeschaltet wird,
- Mittel (12) zur Aktualisierung, die elektrisch nur von der Hauptenergiequelle (14) versorgt werden und, wenn das Kommunikationsgerät in Betrieb ist, derart angeordnet sind, dass sie automatisch und regelmäßig das programmierbare Inbetriebnahmedatum zu einem Datum nach dem von der Zeitschaltung gelieferten aktualisieren, und
dass die Inbetriebnahmemittel (26, 28, 16), wenn das Kommunikationsgerät zufällig außer Betrieb ist, derart angeordnet sind, dass sie das laufende Datum mit dem vorher aktualisierten Inbetriebnahmedatum vergleichen, um die Inbetriebnahme des Geräts auszulösen, wenn das laufende Datum und das Inbetriebnahmedatum zusammenfallen.

2. Tragbares Kommunikationsgerät nach Anspruch 1, bei dem die Bearbeitungseinheit (10) die Mittel (12) zur automatischen Aktualisierung des Inbetriebnahmedatums umfasst.

3. Tragbares Kommunikationsgerät nach Anspruch 1, **dadurch gekennzeichnet, dass** die Inbetriebnahmemittel (26,28,16) ein Register (28) eines Inbetriebnahmedatums umfassen, das von den automatischen Aktualisierungsmitteln (12) zu einem Datum D nach dem laufenden Datum aktualisiert werden kann, so dass D = t + N, wobei N ein Zeitwert größer oder gleich einer Aktualisierungsperiodizität und t das laufende Datum ist.

4. Tragbares Kommunikationsgerät nach Anspruch 1, bei dem die Nebenenergiequelle eine elektrische Kapazität umfasst.

5. Tragbares Kommunikationsgerät nach einem der Ansprüche 1 bis 4, **dadurch gekennzeichnet, dass** es ein tragbares Telefon darstellt.

6. Verfahren zur Inbetriebnahme eines tragbaren Kommunikationsgeräts, das zu einem programmierbaren Inbetriebnahmedatum in Betrieb gesetzt werden kann, **dadurch gekennzeichnet, dass** es darin besteht:
- wenn das Kommunikationsgerät in Betrieb ist, regelmäßig das programmierbare Inbetriebnahmedatum zu einem Datum nach einem laufenden Datum zu aktualisieren, und
- wenn das Kommunikationsgerät zufällig abgeschaltet wird, das laufende Datum mit dem vorher aktualisierten Inbetriebnahmedatum zu vergleichen, um das Gerät in Betrieb zu setzen, wenn das laufende Datum und das Inbetriebnahmedatum zusammenfallen.

7. Verfahren nach Anspruch 6, bei dem das Inbetriebnahmedatum durch Hinzufügen eines Zeitinkrements zum laufenden Datum aktualisiert wird.

8. Verfahren nach Anspruch 7, bei dem das Inbetriebnahmedatum mit einer kürzeren Periodizität als ein Wert des Zeitinkrements aktualisiert wird.
